# EUROPEAN PATENT SPECIFICATION

(11) **EP 4 067 074 B1**
(45) Date of publication and mention of the grant of the patent: **30.08.2023**
(21) Application number: 20892448.0
(22) Date of filing: 15.10.2020
(51) Int. Cl.: B32B 25/04, B60C 1/00, B60C 9/00, C08F 210/00, C08F 236/04, B32B 15/06, B32B 7/12, C09J 11/08, C09J 115/02, C09J 123/04, C09J 123/26

(54) **RUBBER-METAL COMPLEX, TIRE, AND RUBBER ARTICLE**
GUMMI-METALL-KOMPLEX, REIFEN UND GUMMIARTIKEL
COMPLEXE CAOUTCHOUC-MÉTAL, PNEU ET ARTICLE EN CAOUTCHOUC

(30) Priority: 28.11.2019 JP 2019215740; 03.04.2020 JP 2020067735
(43) Date of publication of application: 05.10.2022
(73) Proprietor: BRIDGESTONE CORPORATION, Chuo-ku Tokyo 104-8340 (JP)
(72) Inventor: SUGI Shinichiro, Tokyo 104-8340 (JP); TAKANO Shigenaga, Tokyo 104-8340 (JP)
(74) Representative: Marks & Clerk LLP
(86) International application number: PCT/JP2020/038967
(87) International publication number: WO 2021/106413

(56) References cited:
- EP-A1- 2 474 586
- WO-A1-2018/186271
- WO-A1-2019/045053
- WO-A1-2019/171679
- WO-A1-2019/216109
- CN-A- 105 199 635
- JP-A- H08 225 660
- JP-A- 2005 047 105
- JP-A- 2009 101 680

## Description

### TECHNICAL FIELD

This disclosure relates to a rubber-metal composite body, a tire, and a rubber article.

### BACKGROUND

A direct vulcanization adhesion method and an indirect vulcanization adhesion method have conventionally been used for adhering and combining a diene-based rubber member and a metal member.

The direct vulcanization adhesion method is an adhesion method in which a vulcanization system such as sulfur and, if necessary, an adhesion accelerator typified by a cobalt salt are preliminarily blended with a rubber member, and, at the same time, an adhesive metal layer of, for example, brass is preliminarily formed on the surface of a metal member, thereby realizing adhesion to the metal layer by a vulcanization reaction (crosslinking reaction) of the vulcanization system. On the other hand, the indirect vulcanization adhesion method is an adhesion method in which an adhesive that has been applied to a rubber member and a metal member obtains vulcanization energy to realize adhesion.

To improve the adhesiveness in the above-mentioned adhesion methods, the material of the rubber member itself has been studied. For example, JP H08-225660 A (PTL 1) describes that SEBS (styrene-ethylenebutylene-styrene block copolymer) modified with maleic anhydride is blended into a rubber member to improve the adhesiveness between a metal reinforcing material and rubber.

PTL 2 relates to a hot-melt adhesive material for dielectric heating.

PTL 3 relates to a rubber-metal hot vulcanization type adhesion agent.

### CITATION LIST

### Patent Literature

PTL 1: JP H08-225660 A
PTL 2: EP 2474586 A1
PTL 3: CN 105199635 A

### SUMMARY

### (Technical Problem)

As described above, in the direct vulcanization adhesion method, it is necessary to form a predetermined adhesive metal layer on the surface of a metal member to be adhered. Further, it is required to reduce the amount of cobalt salt to be blended in the rubber member in the direct vulcanization adhesion method, from the viewpoint of lowering the burden on the environment. Furthermore, sulfur, which is usually used as a vulcanization system in the direct vulcanization adhesion method, affects deterioration of processability, heat deterioration, oxygen deterioration and the like, and therefore it is desirable to reduce the amount of sulfur used.

On the other hand, an organic solvent is usually used in the adhesive in the indirect vulcanization adhesion method. However, from the viewpoint of the burden on the environment and the like, it is preferable that the amount of the organic solvent used be small and particularly preferable that no organic solvent be used.

Based on these circumstances, it is required to develop an improved technique for firmly adhering a rubber member and a metal member.

It could thus be helpful to provide a rubber-metal composite body in which a rubber member and a metal member are firmly adhered to each other. It is also helpful to provide a high-strength tire and a high-strength rubber article using the rubber-metal composite body.

### (Solution to Problem)

The rubber-metal composite body of the present disclosure is a rubber-metal composite body in which a rubber member and a metal member are adhered to each other via an adhesion layer, wherein
the adhesion layer contains a polyolefin-based resin having a polar functional group, and a copolymer having a conjugated diene unit and a non-conjugated olefin unit but having no butylene unit,
the polyolefin-based resin having a polar functional group is an acid-modified polyolefin-based resin, and
the rubber member is in contact with at least the copolymer, and the metal member is in contact with at least the resin having a polar functional group.

The tire of the present disclosure comprises the rubber-metal composite body.

The rubber article of the present disclosure comprises the rubber-metal composite body.

### (Advantageous Effect)

According to the present disclosure, it is possible to provide a rubber-metal composite body in which a rubber member and a metal member are firmly adhered to each other. Further, according to the present disclosure, it is possible to provide a high-strength tire and a high-strength rubber article using the rubber-metal composite body.

### DETAILED DESCRIPTION

The following describes the present disclosure in detail based on embodiments.

### (Rubber-metal composite body)

In the rubber-metal composite body of one embodiment of the present disclosure (hereinafter, may be referred to as "composite body of the present embodiment"), a rubber member and a metal member are adhered to each other via an adhesion layer. Further, in the composite body of the present embodiment, the adhesion layer contains a polyolefin-based resin having a polar functional group (hereinafter, may be referred to as "polar resin"), and a copolymer having a conjugated diene unit and a non-conjugated olefin unit but having no butylene unit (hereinafter, may be referred to as a "diene-olefin-based copolymer"). In the composite body of the present embodiment, the polyolefin-based resin having a polar functional group is an acid-modified polyolefin-based resin. In the composite body of the present embodiment, the rubber member is in contact with at least the diene-olefin-based copolymer, and the metal member is in contact with at least the polar resin. According to the composite body of the present embodiment, the rubber member and the metal member are firmly adhered to each other because of the above-described configuration.

The reason is as follows. First, the polar resin can be highly bonded to the metal member by, for example, a hydrogen bond derived from the polar functional group. Additionally, both the polar resin and the diene-olefin-based copolymer contained in the adhesion layer have an olefin unit, so that they are highly compatible with each other. Further, the diene-olefin-based copolymer contained in the adhesion layer has a conjugated diene unit, so that it can be bonded to the rubber member by a co-crosslinking reaction. It is considered that, in the composite body of the present embodiment, the rubber member and the metal member can be firmly adhered to each other via the above-described adhesion layer because of these effects.

The composite body of the present embodiment can be used for various rubber articles such as tires, conveyor belts, hoses, and crawlers, which will be described later.

### <Metal member>

The shape of the metal member used in the composite body of the present embodiment is not particularly limited and may be appropriately selected depending on the intended purpose, and examples thereof include a cord shape and a flat plate shape. In particular, examples of a cord-shaped metal member typified by a steel cord include those made by twisting a plurality of metal wires (metal steel wires), and those made of a single metal wire.

Examples of the material of the metal member include iron, steel (stainless steel), lead, aluminum, copper, brass, bronze, Monel metal alloy, nickel, and zinc. However, in the present embodiment, the material of the metal member is not particularly limited, and any material can realize firm adhesion to the rubber member. Further, the metal member used in the composite body of the present embodiment may be plated with any metal on the surface. When the metal member has plating on the surface, the material of the main body of the metal member may be non-metal. The plating on the surface is not particularly limited, and examples thereof include copper plating, zinc plating, and brass plating.

### <Rubber member>

The rubber member in the composite body of the present embodiment is to be adhered to the metal member. The shape of the rubber member is not particularly limited and may be appropriately selected depending on the intended purpose, and examples thereof include a flat plate shape. When the metal member has a cord shape, the rubber member can cover the peripheral surface of the metal member (via the adhesion layer). Further, the rubber member in the composite body of the present embodiment may be a vulcanized one.

The rubber member may be prepared with a rubber composition containing at least a rubber component. The rubber component preferably contains a diene-based rubber and more preferably consists only of a diene-based rubber. As a result, the rubber member and the copolymer contained in the adhesion layer are co-crosslinked, and the adhesiveness can be further improved. Examples of the diene-based rubber include natural rubber (NR), isoprene rubber (IR), butadiene rubber (BR), styrene-butadiene rubber (SBR), styrene-isoprene-butadiene rubber (SIBR), butyl rubber, ethylene-propylene rubber (EPM), ethylene propylene diene rubber (EPDM), chloroprene rubber (CR), and acrylonitrile butadiene rubber (NBR). The rubber component may be used alone or in combination of two or more. It is particularly preferable to use natural rubber, isoprene rubber, butadiene rubber, styrene-butadiene rubber, butyl rubber, acrylonitrile butadiene rubber, chloroprene rubber or ethylene-propylene rubber and more preferable to use natural rubber as the rubber component, from the viewpoint of high breaking properties.

The rubber composition used for preparing the rubber member may appropriately contain, if necessary, a filler such as carbon black and silica, a filler modifier such as a silane coupling agent, a vulcanizing agent such as sulfur, a vulcanization accelerator, a vulcanization accelerating aid such as zinc oxide, a softener such as oil, an age resistor, an anti-scorch agent, a processing aid, a lubricant, a tackifier, a colorant, and the like depending on the intended purpose.

From the viewpoint of environmental regulations, the rubber composition used for preparing the rubber member preferably contains substantially no cobalt-containing compound. The same applies to the rubber member used in the composite body of the present embodiment, where it preferably contains substantially no cobalt-containing compound from the viewpoint of environmental regulations. Conventionally, a cobalt-containing compound such as a cobalt salt may be blended in rubber to improve adhesiveness, but in the present embodiment, high adhesiveness to the metal member can be realized even if no cobalt-containing compound is used in the rubber member.

The rubber composition used for preparing the rubber member preferably has a sulfur content of less than 3 mass with respect to 100 parts by mass of the rubber component, from the viewpoint of suppressing deterioration of processability, heat deterioration, and oxygen deterioration. The same applies to the rubber member used in the composite body of the present embodiment, and it preferably has a sulfur content of less than 3 mass with respect to 100 parts by mass of the rubber component, from the viewpoint of suppressing deterioration of processability, heat deterioration, and oxygen deterioration. Conventionally, a large amount of sulfur may be blended to rubber to improve adhesiveness, but in the present embodiment, high adhesiveness to the metal member can be realized even without a large amount of sulfur in the rubber member.

The rubber composition is not particularly limited, and it can be prepared, for example, by blending and kneading each of the above-described components according to a conventional method. At the time of kneading, a kneading machine such as a Banbury mixer or a kneader may be used. Further, when the rubber composition is used to form a rubber member in, for example, a sheet shape or a strip shape, a known forming machine such as an extruder or a press may be used.

The rubber member in the composite body of the present embodiment can be formed by performing vulcanization with the rubber composition being in contact with the diene-olefin-based copolymer in the adhesion layer.

### <Adhesion layer>

The adhesion layer used in the composite body of the present embodiment contains at least a polyolefin-based resin having a polar functional group (polar resin), and a copolymer having a conjugated diene unit and a non-conjugated olefin unit but having no butylene unit (diene-olefin-based copolymer).

The adhesion layer may consist only of one layer containing the polar resin and the diene-olefin-based copolymer, or it may have two layers of one layer containing the polar resin and one layer containing the diene-olefin-based copolymer. However, the adhesion layer in the composite body of the present embodiment preferably has two layers as described above, from the viewpoint of further strengthening the adhesiveness between the rubber member and the metal member.

In the composite body of the present embodiment, the rubber member is in contact with at least the diene-olefin-based copolymer, and the metal member is in contact with at least the polar resin. In the case where the adhesion layer consists of one layer containing the polar resin and the diene-olefin-based copolymer, the "contact between the rubber member and the diene-olefin-based copolymer" and the "contact between the metal member and the polar resin" can be realized by sandwiching the adhesion layer, in which the polar resin and the diene-olefin-based copolymer are sufficiently mixed and dispersed, between the rubber member and the metal member. In the case where the adhesion layer has two layers of one layer containing the polar resin and one layer containing the diene-olefin-based copolymer, the "contact between the rubber member and the diene-olefin-based copolymer" and the "contact between the metal member and the polar resin" can be realized by satisfying the contact relationship of "metal member - layer containing the polar resin - layer containing the diene-olefin-based copolymer - rubber member".

The adhesion layer in the case where the adhesion layer consists of one layer, or the layer containing the diene-olefin copolymer in the case where the adhesion layer has two layers may appropriately contain, if necessary, a peroxide (which will be described later), a filler such as carbon black and silica, a filler modifier such as a silane coupling agent, a vulcanizing agent such as sulfur, a vulcanization accelerator, a vulcanization accelerating aid such as zinc oxide, a softener such as oil, an age resistor, an anti-scorch agent, a processing aid, a lubricant, a tackifier, a colorant, and the like depending on the intended purpose.

Examples of the polyolefin-based resin having a polar functional group include a resin in which a polar functional group is imparted to a polyolefin-based polymer; a copolymer of olefin and a polymerizable monomer having a polar functional group copolymerizable with olefin; and an ionomer resin in which molecules of polyolefin-based polymer are crosslinked by metal ions. Examples of the polar functional group include an amino group, a carboxyl group, an aldehyde group, a hydroxyl group, a sulfo group, a cyano group, and an alkoxy group. Examples of the resin in which a polar functional group is imparted to a polyolefin-based polymer include an acid-modified polyolefin-based resin. On the other hand, examples of the polyolefin-based polymer (polyolefin-based resin) include polyethylene, polypropylene, polystyrene, ethylene-propylene copolymer, ethylene-methacrylic acid copolymer, ethylene-ethyl acrylate copolymer, ethylene-propylene-diene ternary copolymer, and ethylene-vinyl acetate copolymer. The polyolefin-based resin having a polar functional group may be used alone or in combination of two or more.

The polyolefin-based resin having a polar functional group is an acid-modified polyolefin-based resin from the viewpoint of further improving the adhesiveness between the rubber member and the metal member, and it is more preferably acid-modified polyethylene from the viewpoint of further enhancing the compatibility with the diene-olefin-based copolymer described above.

In the case where the adhesion layer has two layers of one layer containing the polar resin and one layer containing the diene-olefin-based copolymer, the layer containing the polar resin can be formed by using only the polar resin without any other components such as an organic solvent. In other words, the layer containing the polar resin may consist only of the polar resin.

The diene-olefin-based copolymer has at least a conjugated diene unit. As used herein, the conjugated diene unit is a structural unit corresponding to a unit derived from a conjugated diene compound as a monomer. Examples of the conjugated diene compound include 1,3-butadiene, isoprene, 1,3-pentadiene, and 2,3-dimethyl-1,3-butadiene. From the viewpoint of further improving the adhesiveness with the rubber member, the conjugated diene unit in the diene-olefin-based copolymer preferably contains a butadiene unit (a structural unit corresponding to a unit derived from 1,3-butadiene) and/or an isoprene unit, and it is more preferable that it consist only of a butadiene unit. The conjugated diene unit in the diene-olefin-based copolymer may be used alone or in combination of two or more.

The ratio of the conjugated diene unit in the diene-olefin-based copolymer is preferably 10 mol% or more. When the ratio is 10 mol or more, the adhesiveness with the rubber member can be further improved. From the same viewpoint, the ratio of the conjugated diene unit in the diene-olefin-based copolymer is more preferably 25 mol% or more and still more preferably 40 mol% or more. Further, the ratio is preferably 80 mol% or less, more preferably 70 mol% or less, and still more preferably 60 mol% or less.

The diene-olefin-based copolymer has at least a non-conjugated olefin unit. As used herein, the non-conjugated olefin unit is a structural unit corresponding to a unit derived from a non-conjugated olefin compound as a monomer. Examples of the non-conjugated olefin compound include α-olefins such as ethylene, propylene, 1-pentene, 1-hexene, 1-heptene, and 1-octene, and heteroatom-substituted alkene compounds such as vinyl pivalate, 1-phenylthioethene, and N-vinylpyrrolidone. From the viewpoint of further improving the compatibility with the polar resin, the non-conjugated olefin unit in the diene-olefin-based copolymer preferably contains an ethylene unit and/or a propylene unit and more preferably consists only of an ethylene unit. The non-conjugated olefin unit in the diene-olefin-based copolymer may be used alone or in combination of two or more.

The ratio of the non-conjugated olefin unit in the diene-olefin-based copolymer is preferably 20 mol% or more. When the ratio is 20 mol% or more, the compatibility with the polar resin can be further improved. From the same viewpoint, the ratio of the non-conjugated olefin unit in the diene-olefin-based copolymer is more preferably 30 mol% or more and still more preferably 40 mol% or more. Further, the ratio of the non-conjugated olefin unit in the diene-olefin-based copolymer is more preferably 99 mol% or less and still more preferably 90 mol% or less, from the viewpoint of sufficiently obtaining the effect of the conjugated diene unit and the like.

The diene-olefin-based copolymer has no butylene unit from the viewpoint of surely obtaining the desired effect. That is, the diene-olefin-based copolymer preferably contains no hydrogenated product of styrene-butadiene copolymer, such as a polymer obtained by hydrogenation of butadiene, or styrene-ethylene/butylene-styrene (SEBS)

The diene-olefin-based copolymer preferably further has an aromatic vinyl unit in addition to the conjugated diene unit and the non-conjugated olefin unit. When the diene-olefin-based copolymer further has an aromatic vinyl unit, the breaking resistance of the copolymer itself is improved, and peeling between the rubber member and the metal member can be effectively suppressed.

As used herein, the aromatic vinyl unit is a structural unit corresponding to a unit derived from an aromatic vinyl compound as a monomer. Examples of the aromatic vinyl compound include styrene, o-methylstyrene, m-methylstyrene, p-methylstyrene, o,p-dimethylstyrene, o-ethylstyrene, m-ethylstyrene, and p-ethylstyrene. The aromatic vinyl unit in the diene-olefin-based copolymer is more preferably a styrene unit from the viewpoint of more effectively improving the breaking resistance of the copolymer itself. The aromatic vinyl unit in the diene-olefin-based copolymer may be used alone or in combination of two or more.

The ratio of the aromatic vinyl unit in the diene-olefin-based copolymer is preferably 1 mol% or more. When the ratio is 1 mol% or more, the effect of improving the breaking resistance of the diene-olefin-based copolymer can be sufficiently obtained. From the same viewpoint, the ratio of the aromatic vinyl unit in the diene-olefin-based copolymer is more preferably 2 mol% or more and still more preferably 5 mol% or more. Further, the ratio of the aromatic vinyl unit in the diene-olefin-based copolymer is more preferably 20 mol% or less from the viewpoint of sufficiently obtaining the effect exhibited by each of the conjugated diene unit and the non-conjugated olefin unit.

The diene-olefin-based copolymer preferably has a polystyrene-equivalent weight average molecular weight (Mw) of 10,000 or more and 10,000,000 or less. When the Mw of the diene-olefin-based copolymer is 10,000 or more, sufficient mechanical strength can be secured, and when it is 10,000,000 or less, high operability can be maintained. From the same viewpoint, the Mw of the diene-olefin-based copolymer is more preferably 100,000 or more and still more preferably 150,000 or more. Further, it is more preferably 9,000,000 or less and still more preferably 8,000,000 or less.

The diene-olefin-based copolymer preferably has a polystyrene-equivalent number average molecular weight (Mn) of 10,000 or more and 10,000,000 or less. When the Mn of the diene-olefin-based copolymer is 10,000 or more, sufficient mechanical strength can be secured, and when it is 10,000,000 or less, high operability can be maintained. From the same viewpoint, the Mn of the diene-olefin-based copolymer is more preferably 50,000 or more and still more preferably 100,000 or more. Further, it is more preferably 9,000,000 or less and still more preferably 8,000,000 or less.

The diene-olefin-based copolymer preferably has a molecular weight distribution [Mw/Mn (weight average molecular weight/number average molecular weight)] of 1.00 or more and 4.00 or less. When the molecular weight distribution of the diene-olefin-based copolymer is 4.00 or less, sufficient homogeneity can be obtained in the physical properties of the diene-olefin-based copolymer. From the same viewpoint, the molecular weight distribution of the diene-olefin-based copolymer is more preferably 3.50 or less and still more preferably 3.00 or less. Further, the molecular weight distribution of the diene-olefin-based copolymer is more preferably 1.50 or more and still more preferably 1.80 or more.

The above-described weight average molecular weight (Mw), number average molecular weight (Mn), and molecular weight distribution (Mw/Mn) are determined by gel permeation chromatography (GPC) using polystyrene as a standard substance.

The diene-olefin-based copolymer preferably has a melting point of 30 °C or higher and preferably has a melting point of 180 °C or lower as measured by a differential scanning calorimeter (DSC). When the melting point of the diene-olefin-based copolymer is 30 °C or higher, the crystallinity of the diene-olefin-based copolymer is increased, and the crack resistance is further improved. When the melting point is 180 °C or lower, there is no need to excessively raise the heating temperature during heating, and the operability is further improved. From the same viewpoint, the melting point of the diene-olefin-based copolymer is more preferably 140 °C or lower. When the copolymer has two or more melting points, it refers to the highest melting point.

The diene-olefin-based copolymer preferably has a degree of crystallinity (ΔH1/ΔH0 × 100, also referred to as "crystal content") of 0.5 % or more. The degree of crystallinity is preferably 50 % or less. When the degree of crystallinity of the diene-olefin-based copolymer is 0.5 % or more, the crystallinity caused by the non-conjugated olefin unit is sufficiently secured, and the crack resistance is further improved. When the degree of crystallinity of the diene-olefin-based copolymer is 50 % or less, the operability during kneading or the like is improved, and the tackiness of the diene-olefin-based copolymer is improved, thereby improving the operability when formed members prepared with the copolymer are sticked to each other. From the same viewpoint, the degree of crystallinity of the diene-olefin-based copolymer is more preferably 1 % or more and still more preferably 1.5 % or more. The degree of crystallinity is more preferably 45 % or less.

The degree of crystallinity can be determined as a ratio (ΔH1/ΔH0 × 100) of the heat absorption peak energy (ΔH1) of the copolymer to be measured with respect to the crystal melting energy (ΔH0) of polyethylene as a 100 % crystal component, which is measured by a differential scanning calorimeter (DSC).

The diene-olefin-based copolymer preferably has a main chain consisting only of an acyclic structure. This can further improve the crack growth resistance. NMR is used as a main measuring means for confirming whether the main chain of the copolymer has a cyclic structure or not. Specifically, when no peak derived from a cyclic structure in the main chain (for example, in a case of three-membered ring to five-membered ring, it refers to a peak appearing at 10 ppm to 24 ppm in a ¹³C-NMR spectrum chart) is observed, it means that the main chain of the copolymer consists only of an acyclic structure.

The diene-olefin-based copolymer preferably consists only of a conjugated diene unit and a non-conjugated olefin unit or preferably consists only of a conjugated diene unit, a non-conjugated olefin unit, and an aromatic vinyl unit. Further, in the diene-olefin-based copolymer, the conjugated diene unit is preferably a butadiene unit, and the non-conjugated olefin unit is preferably an ethylene unit, from the viewpoint of more firmly adhering the rubber member and the metal member.

For example, the copolymer described in WO 2017/0655301 A1 can be preferably used as a copolymer having a conjugated diene unit, a non-conjugated olefin unit, and an aromatic vinyl unit, and the copolymers described in WO 2012/105258 A1 and WO 2012/014463 A1 can be preferably used as a copolymer having a conjugated diene unit and a non-conjugated olefin unit.

In the composite body of the present embodiment, it is preferable that peroxide be contained in the diene-olefin-based copolymer, and it is more preferable that peroxide is dispersed in the diene-olefin-based copolymer. In this case, because the softening of the copolymer due to the presence of an olefin unit is significantly suppressed, self-breaking and self-peeling of the adhesion layer (layer containing the diene-olefin-based copolymer) are suppressed even if the composite body is placed in a high-temperature environment, thereby maintaining more firm adhesion between the rubber member and the metal member. The containing and/or dispersion of the peroxide can be achieved by preliminarily blending the peroxide with the diene-olefin-based copolymer and performing kneading according to a conventional method. In the composite body, the peroxide may form a crosslinked structure in the diene-olefin-based copolymer.

Examples of the peroxide include ketone peroxide, peroxyketal, dialkyl peroxide, hydroperoxide, diacyl peroxide, peroxyester, and peroxydicarbonate.

Examples of the ketone peroxide include methyl ethyl ketone peroxide.

Examples of the peroxyketal include 1,1-di (t-butylperoxy) cyclohexane, 2,2-di (t-butylperoxy) butane, n-butyl 4,4-di (t-butylperoxy) valerate, ethyl 3,3-di (t-butylperoxy) butyrate, and 1,1-di (t-amylperoxy) cyclohexane.

Examples of the dialkyl peroxide include dicumyl peroxide, 2,5-dimethyl-2,5-di (t-butylperoxy) hexane, 1,3-di (2-t-butylperoxyisopropyl) benzene, di-t-butyl peroxide, 2,5-dimethyl-2,5-di (t-butylperoxy) hexyne-3, and di-t-amyl peroxide.

Examples of the hydroperoxide include 1,1,3,3-tetramethyl butyl hydroperoxide, t-butyl hydroperoxide, and t-amyl hydroperoxide.

Examples of the diacyl peroxide include diisononanoyl peroxide, dilauroyl peroxide, and dibenzoyl peroxide

Examples of the peroxyester include 3-hydroxy-1,1-dimethylbutylperoxyneodecanoate, α-cumylperoxyneodecanoate, 1,1,3,3-tetramethylbutylperoxyneodecanoate, 1,1,3,3-tetramethylbutylperoxy-2-ethylhexanoate, t-butylperoxyneodecanoate, t-butylperoxyneoheptanoate, t-butylperoxypivalate, t-butylperoxy-2-ethylhexanoate, t-butylperoxyisobutyrate, t-butylperoxyacetate, t-butylperoxyisononanoate, t-butylperoxybenzoate, t-amylperoxyneodecanoate, t-amylperoxypivalate, t-amylperoxy-2-ethylhexanoate, t-amylperoxynormaloctoate, t-amylperoxyacetate, t-amylperoxyisononanoate, and t-amylperoxybenzoate.

Examples of the peroxydicarbonate include di (2-ethylhexyl) peroxydicarbonate and di (secondary butyl) peroxydicarbonate.

Among those described above, the peroxide is preferably dialkyl peroxide or hydroperoxide and more preferably dicumyl peroxide or 2,5-dimethyl-2,5-di (t-butylperoxy) hexane.

The peroxide preferably has a one-hour half-life temperature higher than the melting point of the diene-olefin-based copolymer. In this case, it is possible to effectively suppress a premature reaction of the peroxide when preliminarily kneading it with the diene-olefin-based copolymer. Peroxide having such a one-hour half-life temperature can be appropriately selected from those described above in consideration of the melting point of the diene-olefin-based copolymer to be used.

The peroxide preferably has a one-hour half-life temperature of 110 °C or higher. In this case, it is possible to effectively suppress a premature reaction of the peroxide when preliminarily kneading it with the diene-olefin-based copolymer. From the same viewpoint, the one-hour half-life temperature of the peroxide is more preferably 120 °C or higher and still more preferably 125 °C or higher.

The peroxide having such a one-hour half-life temperature can be appropriately selected from those described above.

The content of the peroxide in the diene-olefin-based copolymer is preferably 0.1 parts by mass or more with respect to 100 parts by mass of the diene-olefin-based copolymer. In this case, the effect of blending the peroxide can be sufficiently obtained. From the same viewpoint, the content of the peroxide is more preferably 0.5 parts by mass or more and still more preferably 1 part by mass or more with respect to 100 parts by mass of the diene-olefin-based copolymer. The content of the peroxide is, although not particularly limited, preferably 5 parts by mass or less with respect to 100 parts by mass of the diene-olefin-based copolymer.

### <Production of rubber-metal composite body>

A method of producing the composite body of the present embodiment is not particularly limited, and the rubber-metal composite body can be produced by arranging a metal member, an adhesion layer, and an (unvulcanized) rubber member so that they are in contact with each other in this order and performing vulcanization. More specifically, the rubber-metal composite body can be produced by arranging a metal member, a layer containing a polar resin and a diene-olefin-based copolymer, and an (unvulcanized) rubber member so that they are in contact with each other in this order and performing vulcanization, for example. In this case, the adhesion layer consists only of one layer. Additionally, the rubber-metal composite body can be produced by arranging a metal member, a layer containing a polar resin, a layer containing a diene-olefin-based copolymer, and an (unvulcanized) rubber member so that they are in contact with each other in this order and performing vulcanization, for example. In this case, the adhesion layer has two layers.

The vulcanization temperature may be 120 °C to 200 °C, specifically 130 °C to 170 °C, and the vulcanization time may be 3 minutes to 6 hours. However, when the above-described peroxide is used, the vulcanization temperature is preferably the same as or higher than the one-hour half-life temperature of the peroxide. More specifically, the vulcanization temperature is preferably 140 °C or higher, 145 °C or higher, or 150 °C or higher. In this case, the cross-linking action (and thus the softening inhibitory action) by the peroxide can be effectively exhibited during the vulcanization.

When the above-described peroxide is used, the peroxide may be preliminarily blended with the diene-olefin-based copolymer, and kneading may be performed according to a conventional method. At that time, the kneading temperature is preferably the same as or higher than the melting point of the diene-olefin-based copolymer, and it is preferably lower than the one-hour half-life temperature of the peroxide. In this case, kneading can be facilitated, and a premature reaction of the peroxide before vulcanization can be effectively suppressed. The kneading time may be one minute to ten minutes.

During the kneading, the amount of the peroxide to be blended with the diene-olefin-based copolymer is preferably 0.1 parts by mass or more with respect to 100 parts by mass of the diene-olefin-based copolymer. In this case, the effect of blending the peroxide can be sufficiently obtained. From the same viewpoint, the amount of the peroxide to be blended with 100 parts by mass of the diene-olefin-based copolymer is more preferably 0.5 parts by mass or more and still more preferably 1 part by mass. Further, the amount of the peroxide to be blended with 100 parts by mass of the diene-olefin-based copolymer is, although not particularly limited, preferably 5 parts by mass or less.

In the above production method, the metal member and the adhesion layer may be heated and welded before contacting the (unvulcanized) rubber member. At that time, the temperature during welding may be, for example, 100 °C to 160 °C.

### (Tire)

A tire of one embodiment of the present disclosure comprises the rubber-metal composite body described above. Because the tire uses the rubber-metal composite body in which a rubber member and a metal member are firmly adhered to each other, the tire has high strength.

In one embodiment of the tire, the rubber-metal composite body can be preferably applied to a carcass, a belt, a bead core, and the like.

### (Rubber article)

A rubber article of one embodiment of the present disclosure comprises the rubber-metal composite body described above. Because the rubber article uses the rubber-metal composite body in which a rubber member and a metal member are firmly adhered to each other, the rubber article has high strength.

The rubber article is not particularly limited, and examples thereof include a conveyor belt, a hose, a rubber crawler, a seismic isolator, a vibration isolator, and a covered electric wire, in addition to a tire.

### EXAMPLES

The following describes the present disclosure in more detail with reference to examples. However, the present disclosure is not limited to the following examples and can be appropriately modified without changing the gist thereof.

### <First Example>

### (Preparation of copolymer A)

First, 91 g of styrene and 379 g of toluene were added to a sufficiently dried 2000 mL pressure-resistant stainless steel reactor.

In a glove box under a nitrogen atmosphere, 0.100 mmol of mono(bis(1,3-tert-butyldimethylsilyl)indenyl)bis(bis(dimethylsilyl)amide) gadolinium complex 1,3-[(t-Bu)Me₂Si]₂C₉H₅Gd[N(SiHMe₂)₂]₂, 0.100 mmol of dimethylanilinium tetrakis(pentafluorophenyl) borate [Me₂NHPhB(C₆F₅)₄], and 1.200 mmol of triisobutylaluminum were charged in a glass container, and 63 mL of toluene was added to prepare a catalyst solution. The catalyst solution was added to the pressure-resistant stainless steel reactor and heated to 60 °C.

Next, ethylene was charged into the pressure-resistant stainless steel reactor at a pressure of 1.4 MPa, and copolymerization was performed at 75 °C for a total of 3 hours. Further, 280 g of a toluene solution containing 70 g of 1,3-butadiene was continuously added over 3 hours.

Next, 1 mL of a 5 mass% isopropanol solution of 2,2'-methylene-bis(4-ethyl-6-t-butylphenol) (NS-5) was added to the pressure-resistant stainless steel reactor to terminate the reaction. Next, the copolymer was separated using a large amount of methanol and vacuum dried at 50 °C to obtain a copolymer A.

### (Preparation of copolymer B)

First, 27 g of styrene and 371 g of toluene were added to a sufficiently dried 2000 mL pressure-resistant stainless steel reactor.

In a glove box under a nitrogen atmosphere, 0.0375 mmol of mono(bis(1,3-tert-butyldimethylsilyl)indenyl)bis(bis(dimethylsilyl)amide) gadolinium complex 1,3-[(t-Bu)Me₂Si]₂C₉H₅Gd[N(SiHMe₂)₂]₂, 0.0375 mmol of dimethylanilinium tetrakis(pentafluorophenyl) borate [Me₂NHPhB(C₆F₅)₄], and 1.20 mmol of triisobutylaluminum were charged in a glass container, and 24 mL of toluene was added to prepare a catalyst solution. The catalyst solution was added to the pressure-resistant stainless steel reactor and heated to 60 °C.

Next, ethylene was charged into the pressure-resistant stainless steel reactor at a pressure of 1.0 MPa, and copolymerization was performed at 75 °C for a total of 3 hours. Further, 352 g of a toluene solution containing 90 g of 1,3-butadiene was continuously added over 3 hours.

Next, 1 mL of a 5 mass% isopropanol solution of 2,2'-methylene-bis(4-ethyl-6-t-butylphenol) (NS-5) was added to the pressure-resistant stainless steel reactor to terminate the reaction. Next, the copolymer was separated using a large amount of methanol and vacuum dried at 50 °C to obtain a copolymer B.

### (Preparation of copolymer C)

First, 27 g of styrene and 403 g of toluene were added to a sufficiently dried 2000 mL pressure-resistant stainless steel reactor.

In a glove box under a nitrogen atmosphere, 0.0375 mmol of mono(bis(1,3-tert-butyldimethylsilyl)indenyl)bis(bis(dimethylsilyl)amide) gadolinium complex 1,3-[(t-Bu)Me₂Si]₂C₉H₅Gd[N(SiHMe₂)₂]₂, 0.0375 mmol of dimethylanilinium tetrakis(pentafluorophenyl) borate [Me₂NHPhB(C₆F₅)₄], and 1.20 mmol of triisobutylaluminum were charged in a glass container, and 24 mL of toluene was added to prepare a catalyst solution. The catalyst solution was added to the pressure-resistant stainless steel reactor and heated to 60 °C.

Next, ethylene was charged into the pressure-resistant stainless steel reactor at a pressure of 1.0 MPa, and copolymerization was performed at 75 °C for a total of 3 hours. Further, 320 g of a toluene solution containing 80 g of 1,3-butadiene was continuously added over 3 hours.

Next, 1 mL of a 5 mass% isopropanol solution of 2,2'-methylene-bis(4-ethyl-6-t-butylphenol) (NS-5) was added to the pressure-resistant stainless steel reactor to terminate the reaction. Next, the copolymer was separated using a large amount of methanol and vacuum dried at 50 °C to obtain a copolymer C.

The polystyrene-equivalent weight average molecular weight (Mw), number average molecular weight (Mn), peak top molecular weight (Mp) and molecular weight distribution (Mw/Mn) of the copolymers were determined based on monodisperse polystyrene by gel permeation chromatography [GPC: HLC-8220GPC/HT manufactured by Tosoh, column: GMH_{HR}-H(S)HT manufactured by Tosoh × 2, detector: differential refractometer (RI)]. The measurement temperature was 140 °C. The results are listed in Table 1.

The ratios (mol%) of the conjugated diene unit (butadiene unit), non-conjugated olefin (ethylene unit) and aromatic vinyl unit (styrene unit) in the copolymers were determined from the integral ratio of each peak in the ¹H-NMR spectrum (100 °C, d-tetrachloroethane standard: 6 ppm). The results are listed in Table 1.

The ¹³C-NMR spectrum of the copolymers was measured. No peak was observed at 10 ppm to 24 ppm in the obtained ¹³C-NMR spectrum chart. In this way, it was confirmed that the main chains of all the synthesized copolymers consisted only of acyclic structures.

Further, the melting point of the copolymers was measured using a differential scanning calorimeter (DSC, manufactured by TA Instruments Japan, "DSCQ2000") in accordance with JIS K 7121-1987. The results are listed in Table 1. In the case of having a plurality of melting points, the highest melting point was measured.

**Table 1**

| | Mw (×10³) | Mn (×10³) | Mp (×10³) | Mw/Mn | Styrene unit (mol%) | Ethylene unit (mol%) | Butadiene unit (mol%) | Melting point (°C) |
|---|---|---|---|---|---|---|---|---|
| Copolymer A | 457 | 184 | 330 | 2.48 | 5 | 69 | 26 | 80 |
| Copolymer B | 464 | 203 | 351 | 229 | 2 | 40 | 58 | 89 |
| Copolymer C | 384 | 165 | 287 | 2.33 | 2 | 58 | 40 | 100 |

### (Preparation of rubber member)

A rubber composition was prepared by kneading the components listed in Table 2 using a Banbury mixer. The obtained rubber composition was formed into a size of 150 mm × 150 mm × thickness 4 mm to prepare an (unvulcanized) rubber member.

**Table 2**

| | | Rubber composition 1 | Rubber composition 2 |
|---|---|---|---|
| Natural rubber | Part by mass | 80 | 100 |
| Styrene-butadiene rubber | | 20 | 0 |
| Carbon black | | 37 | 61 |
| Zinc oxide | | 5 | 6 |
| Active zinc oxide | | 0 | 4 |
| Stearic acid | | 2 | 0 |
| Petroleum-based softener | | 10 | 0 |
| Pine tar | | 4 | 0 |
| Age resistor A ∗1 | | 1.5 | 0 |
| Age resistor B ∗2 | | 0 | 0.5 |
| Age resistor C ∗3 | | 0 | 1 |
| Vulcanization accelerator A ∗4 | | 0.75 | 0 |
| Vulcanization accelerator B ∗5 | | 0.75 | 0 |
| Vulcanization accelerator C *6 | | 0 | 0.8 |
| Sulfur | | 2.5 | 7.5 |
| Cobalt fatty acid salt ∗7 | | 0 | 0.8 |

| | | | |
|---|---|---|---|
| ∗1 Age resistor A: N-phenyl-β-naphthylamine ∗2 Age resistor B: N-phenyl-N'-(1,3-dimethylbutyl)-p-phenylenediamine ∗3 Age resistor C: 2,2'-methylene bis(4-methyl-6-tert-butylphenol) ∗4 Vulcanization accelerator A: 2-benzothiadyl disulfide ∗5 Vulcanization accelerator B: diphenylguanidine ∗6 Vulcanization accelerator C: N-N'-dicyclohexyl-2-benzothiazolyl sulfenamide ∗7 Cobalt fatty acid salt: with a cobalt content of 22.5 mass% | | | |

### (Preparation of rubber-metal composite body)

In each example, a polyolefin-based resin having a polar functional group was applied directly above a metal member processed to 100 mm × 25 mm × thickness 1 mm so that the thickness was 0.1 mm. Next, the copolymer prepared as described above was placed directly above the applied resin so that the thickness was 1 mm, thereby obtaining a metal member - resin - copolymer laminate. The obtained laminate was sandwiched between two flat plate molds having a thickness of 1.8 mm, welded at 130 °C for 10 minutes, and then cooled for 10 minutes.

Next, a plurality of the welded laminates was arranged at intervals at room temperature on a sufficiently large flat plate mold having a thickness of 3 mm so that the metal member was on the mold side. Next, the (unvulcanized) rubber member was arranged to cover the plurality of laminates and to be in contact with the copolymer. Then, vulcanization was performed while pressing by another flat plate mold, and then it was cooled for 10 minutes. In this way, a rubber-metal composite body was prepared in which a rubber member and a metal member were adhered to each other via an adhesion layer (an adhesion layer having two layers of one layer containing a polar resin and one layer containing a diene-olefin-based copolymer).

The vulcanization conditions were 160 °C and 20 minutes in a case of using a rubber member prepared with the rubber composition 1, and the vulcanization conditions were 145 °C and 40 minutes in a case of using a rubber member prepared with the rubber composition 2.

The material of the metal member, the copolymer, and the rubber composition used for preparing the rubber member in each example were as listed in Table 3.

In Comparative Example 1, a rubber-metal composite body was prepared in the same manner as in the above-described example except that no copolymer was used. Further, in Comparative Example 2, a rubber-metal composite body was prepared in the same manner as in the above-described example except that no polyolefin-based resin having a polar functional group or copolymer was used.

### (Evaluation of adhesiveness)

The adhesive strength (N/25 mm width) of the rubber-metal composite bodies prepared as described above was measured in accordance with Japanese Industrial Standards JIS K 6854-2. The results are listed in Table 3. The larger the value is, the better the adhesiveness between the metal member and the rubber member is. When the adhesion layer was peeled off from the metal surface and the effect of adhesion could not be confirmed, it was evaluated as "peel off' and listed in Table 3.

**Table 3**

| | | Example 1 | Example 2 | Example 3 | Example 4 | Example 5 | Example 6 | Comparative Example 1 | Comparative Example 2 |
|---|---|---|---|---|---|---|---|---|---|
| Metal member | Material | Iron | Brass | Zinc ∗8 | Brass | Brass | Brass | Iron | Iron |
| Adhesion layer | Polyolefin-based resin having a polar functional group *9 | Yes | Yes | Yes | Yes | Yes | Yes | Yes | - |
| | Copolymer A | Yes | Yes | Yes | - | Yes | - | - | - |
| | Copolymer B | - | - | - | Yes | - | Yes | - | - |
| Rubber member | Rubber composition 1 | Yes | Yes | Yes | Yes | - | - | Yes | Yes |
| | Rubber composition 2 | - | - | - | - | Yes | Yes | - | - |
| Evaluation | Adhesive strength (N/25 mm width) | 200 | 250 | 350 | 300 | 200 | 400 | Peel off | Peel off |

| | | | | | | | | | |
|---|---|---|---|---|---|---|---|---|---|
| **[0086]** ∗8 Hot-dip galvanized steel sheet was used. ∗9 Polyolefin-based resin having a polar functional group: "ADMER NE065" manufactured by Mitsui Chemicals, Inc., acid-modified polyethylene | | | | | | | | | |

From Table 3, it is understood that all of the rubber-metal composite bodies of Examples, in which a rubber member and a metal member were adhered to each other via a predetermined adhesion layer, had higher adhesiveness between the rubber member and the metal member than the rubber-metal composite bodies of Comparative Examples. It is particularly understood that even if a rubber member prepared with the rubber composition 1 having a low sulfur content and no cobalt-containing compound was used as the rubber member, it could be firmly adhered to the metal member. Further, it is understood that the rubber member and the metal member could be firmly adhered to each other regardless of the surface material of the metal member.

### <Second Example>

Next, a rubber-metal composite body according to the present disclosure using peroxide was prepared and evaluated as follows.

### (Preparation of rubber member)

The rubber composition 2 was formed into a size of 150 mm × 150 mm × thickness 4 mm to prepare an (unvulcanized) rubber member.

### (Dispersion of peroxide in copolymer and measurement of storage modulus at 100 °C)

In each example, the copolymer A or the copolymer C was slowly kneaded at 100 °C using Plastomill, then the peroxide was charged at the ratio listed in Table 4, and the mixture was kneaded for 2 to 3 minutes to disperse the peroxide in the copolymer.

Samples collected from each copolymer in which the peroxide had been dispersed were heated at 160 °C for 20 minutes. Next, the storage modulus was measured using "ARES-G2" (dynamic viscoelasticity measuring tester) manufactured by TA Instruments, where strain was applied under conditions of 10 Hz while raising the temperature from -100 °C to 150 °C at 4 °C/min. The storage modulus of Examples 8 to 10 was an index with the storage modulus of Example 7 being 100, and the storage modulus of Examples 12 to 14 was an index with the storage modulus of Example 11 being 100. The results are listed in Table 4. The larger the value is, the less softened it is.

### (Preparation of rubber-metal composite body (only in Examples 7 and 8))

In Examples 7 and 8, a polyolefin-based resin having a polar functional group ("ADMER NE065" manufactured by Mitsui Chemicals, Inc., acid-modified polyethylene) was applied directly above a metal member (brass plate "C2801") processed to 100 mm × 25 mm × thickness 1 mm so that the thickness was 0.1 mm. Next, the copolymer in which peroxide had been appropriately dispersed as described above was placed directly above the applied resin so that the thickness was 1 mm, thereby obtaining a metal member - resin - copolymer laminate. The obtained laminate was sandwiched between two flat plate molds having a thickness of 1.8 mm, welded at 130 °C for 10 minutes, and then cooled for 10 minutes.

Next, a plurality of the welded laminates was arranged at intervals at room temperature on a sufficiently large flat plate mold having a thickness of 3 mm so that the metal member was on the mold side. Next, the (unvulcanized) rubber member was arranged to cover the plurality of laminates and to be in contact with the copolymer. Then, vulcanization was performed while pressing by another flat plate mold, and then it was cooled for 10 minutes. In this way, a rubber-metal composite body was prepared in which a rubber member and a metal member were adhered to each other via an adhesion layer (an adhesion layer having two layers of one layer containing a polar resin and one layer containing a diene-olefin-based copolymer). The vulcanization conditions were 160 °C and 20 minutes.

### (Evaluation of adhesiveness)

The adhesive strength (N/25 mm width) of the obtained rubber-metal composite bodies was measured in accordance with Japanese Industrial Standards JIS K 6854-2, and the result of Example 8 was an index with the result of Example 7 being 100. The results are listed in Table 4. The larger the value is, the better the adhesiveness between the metal member and the rubber member is.

**Table 4**

| | | | Example 7 | Example 8 | Example 9 | Example 10 | Example 11 | Example 12 | Example 13 | Example 14 |
|---|---|---|---|---|---|---|---|---|---|---|
| Copolymer A | | Part by mass | 100 | 100 | 100 | 100 | - | - | - | - |
| Copolymer C | | | - | - | - | - | 100 | 100 | 100 | 100 |
| Peroxide ∗10 | | | - | 0.5 | 1 | 2 | - | 0.5 | 1 | 2 |
| Evaluation | 100 °C Storage modulus | Index value | 100 | 467 | 524 | 526 | 100 | 253 | 207 | 377 |
| | Adhesiveness | Index value | 100 | 177 | | | | | | |

| | | | | | | | | | | |
|---|---|---|---|---|---|---|---|---|---|---|
| ∗10 Peroxide: "PERCUMYL^{®} (PERCUMYL is a registered trademark in Japan, other countries, or both) D-40" manufactured by NOF CORPORATION, dicumyl peroxide, one-hour half-life temperature: 135.7 °C | | | | | | | | | | |

From Table 4, it is understood that, by dispersing the peroxide in the diene-olefin-based copolymer, the softening of the copolymer can be suppressed and strong adhesion can be maintained even if the rubber-metal composite body is placed in a high-temperature environment.

It is considered that the effect of dispersing the peroxide in the diene-olefin-based copolymer can be similarly obtained in the rubber-metal composite body in the first example described above.

Although a flat metal member and a flat rubber member were adhered to each other in the above examples, the present disclosure is not limited to this. For example, the present disclosure can be applied to the adhesion between a cord-shaped metal member such as a steel cord and a covering rubber that covers the metal member. Although a layer made of a polyolefin-based resin having a polar functional group and a layer made of a copolymer were separately formed as the adhesion layer in the above examples, the present disclosure is not limited to this. For example, an adhesion layer can also be formed using a mixture in which a polyolefin-based resin having a polar functional group and a copolymer are sufficiently dispersed.

### INDUSTRIAL APPLICABILITY

According to the present disclosure, it is possible to provide a rubber-metal composite body in which a rubber member and a metal member are firmly adhered to each other. Further, according to the present disclosure, it is possible to provide a high-strength tire and a high-strength rubber article using the rubber-metal composite body.

## Claims

1. A rubber-metal composite body in which a rubber member and a metal member are adhered to each other via an adhesion layer, wherein
the adhesion layer contains a polyolefin-based resin having a polar functional group, and a copolymer having a conjugated diene unit and a non-conjugated olefin unit but having no butylene unit,
the polyolefin-based resin having a polar functional group is an acid-modified polyolefin-based resin, and
the rubber member is in contact with at least the copolymer, and the metal member is in contact with at least the resin having a polar functional group.

2. The rubber-metal composite body according to claim 1, wherein the acid-modified polyolefin-based resin is acid-modified polyethylene.

3. The rubber-metal composite body according to claim 1 or 2, wherein a ratio of the conjugated diene unit in the copolymer is 10 mol% or more.

4. The rubber-metal composite body according to claim 3, wherein a ratio of the conjugated diene unit in the copolymer is 25 mol% or more.

5. The rubber-metal composite body according to any one of claims 1 to 4, wherein in the copolymer, the conjugated diene unit is a butadiene unit, and the non-conjugated olefin unit is an ethylene unit.

6. The rubber-metal composite body according to any one of claims 1 to 5, wherein the copolymer further has an aromatic vinyl unit.

7. The rubber-metal composite body according to claim 6, wherein the aromatic vinyl unit is a styrene unit.

8. The rubber-metal composite body according to any one of claims 1 to 7, wherein the rubber member contains substantially no cobalt-containing compound.

9. The rubber-metal composite body according to any one of claims 1 to 8, wherein the rubber member has a sulfur content of less than 3 parts by mass with respect to 100 parts by mass of rubber component.

10. The rubber-metal composite body according to any one of claims 1 to 9, wherein the copolymer contains peroxide.

11. The rubber-metal composite body according to claim 10, wherein the peroxide has a one-hour half-life temperature higher than a melting point of the copolymer.

12. The rubber-metal composite body according to claim 10 or 11, wherein the peroxide has a one-hour half-life temperature of 110 °C or higher.

13. A tire comprising the rubber-metal composite body according to any one of claims 1 to 12.

14. A rubber article comprising the rubber-metal composite body according to any one of claims 1 to 12.

## Patentansprüche

1. Gummi-Metall-Verbundkörper, in dem ein Gummielement und ein Metallelement über eine Haftschicht aneinander geklebt sind, wobei
die Haftschicht ein Harz auf Polyolefin-Grundlage, das eine polare funktionelle Gruppe aufweist, und ein Copolymer, das eine konjugierte Dieneinheit und eine nicht-konjugierte Olefineinheit aufweist, aber keine Butyleneinheit aufweist, enthält,
das Harz auf Polyolefin-Grundlage, das eine polare funktionelle Gruppe aufweist, ein säuremodifiziertes Harz auf Polyolefin-Grundlage ist und
das Gummielement in Kontakt mit mindestens dem Copolymer steht und das Metallelement in Kontakt mit mindestens dem Harz, das eine polare funktionelle Gruppe aufweist, steht.

2. Gummi-Metall-Verbundkörper nach Anspruch 1, wobei das säuremodifizierte Harz auf Polyolefin-Grundlage ein säuremodifiziertes Polyethylen ist.

3. Gummi-Metall-Verbundkörper nach Anspruch 1 oder 2, wobei ein Anteil der konjugierten Dieneinheit in dem Copolymer 10 Mol-% oder mehr beträgt.

4. Gummi-Metall-Verbundkörper nach Anspruch 3, wobei ein Anteil der konjugierten Dieneinheit in dem Copolymer 25 Mol-% oder mehr beträgt.

5. Gummi-Metall-Verbundkörper nach einem der Ansprüche 1 bis 4, wobei in dem Copolymer die konjugierte Dieneinheit eine Butadieneinheit ist und die nicht-konjugierte Olefineinheit eine Ethyleneinheit ist.

6. Gummi-Metall-Verbundkörper nach einem der Ansprüche 1 bis 5, wobei das Copolymer ferner eine aromatische Vinyleinheit aufweist.

7. Gummi-Metall-Verbundkörper nach Anspruch 6, wobei die aromatische Vinyleinheit eine Styroleinheit ist.

8. Gummi-Metall-Verbundkörper nach einem der Ansprüche 1 bis 7, wobei das Gummielement im Wesentlichen keine kobalthaltige Verbindung enthält.

9. Gummi-Metall-Verbundkörper nach einem der Ansprüche 1 bis 8, wobei das Gummielement einen Schwefelgehalt von weniger als 3 Masseteilen in Bezug auf 100 Masseteile der Gummikomponente aufweist.

10. Gummi-Metall-Verbundkörper nach einem der Ansprüche 1 bis 9, wobei das Copolymer Peroxid enthält.

11. Gummi-Metall-Verbundkörper nach Anspruch 10, wobei das Peroxid eine Einstunden-Halbwertzeittemperatur, höher als ein Schmelzpunkt des Copolymers, aufweist.

12. Gummi-Metall-Verbundkörper nach Anspruch 10 oder 11, wobei das Peroxid eine Einstunden-Halbwertzeittemperatur von 110 °C oder mehr aufweist.

13. Reifen, der den Gummi-Metall-Verbundkörper nach einem der Ansprüche 1 bis 12 umfasst.

14. Gummiartikel, der den Gummi-Metall-Verbundkörper nach einem der Ansprüche 1 bis 12 umfasst.

## Revendications

1. Corps composite caoutchouc-métal, dans lequel un élément de caoutchouc et un élément de métal sont adhérés l'un à l'autre via une couche d'adhésion, dans lequel :
la couche d'adhésion contient une résine à base de polyoléfine comportant un groupe fonctionnel polaire, et un copolymère comportant une unité de diène conjuguée et une unité d'oléfine non conjuguée, mais ne comportant pas d'unité de butylène ;
la résine à base de polyoléfine comportant un groupe fonctionnel polaire est une résine à base de polyoléfine modifiée par acide ; et
l'élément de caoutchouc est en contact avec au moins le copolymère, et l'élément métallique est en contact avec au moins la résine comportant un groupe fonctionnel polaire.

2. Corps composite caoutchouc-métal selon la revendication 1, dans lequel la résine à base de polyoléfine modifiée par acide est du polyéthylène modifié par acide.

3. Corps composite caoutchouc-métal selon la revendication 1 ou 2, dans lequel un rapport de l'unité de diène conjuguée dans le copolymère correspond à 10 % en moles ou plus.

4. Corps composite caoutchouc-métal selon la revendication 3, dans lequel un rapport de l'unité de diène conjuguée dans le copolymère correspond à 25% en moles ou plus.

5. Corps composite caoutchouc-métal selon l'une quelconque des revendications 1 à 4, dans lequel, dans le copolymère, l'unité de diène conjuguée est une unité de butadiène, et l'unité d'oléfine non conjuguée est une unit d'éthylène.

6. Corps composite caoutchouc-métal selon l'une quelconque des revendications 1 à 5, dan lequel le copolymère comporte en outre une unité de vinyle aromatique.

7. Corps composite caoutchouc-métal selon la revendication 6, dans lequel l'unité de vinyle aromatique est une unité de styrène.

8. Corps composite caoutchouc-métal selon l'une quelconque des revendications 1 à 7, dans lequel l'élément de caoutchouc ne contient sensiblement pas de composé contenant du cobalt.

9. Corps composite caoutchouc-métal selon l'une quelconque des revendications 1 à 8, dans lequel l'élément de caoutchouc a une teneur en soufre inférieure à 3 parties en masse par rapport à 100 parties en masse du composant de caoutchouc.

10. Corps composite caoutchouc-métal selon l'une quelconque des revendications 1 à 9, dans lequel le copolymère contient du peroxyde.

11. Corps composite caoutchouc-métal selon la revendication 10, dans lequel le peroxyde a une température de demi-vie d'une heure supérieure à un point de fusion du copolymère.

12. Corps composite caoutchouc-métal selon la revendication 10 ou 11, dans lequel le peroxyde a une température de demi-vie d'une heure de 110°C ou plus.

13. Pneumatique, comprenant un corps composite caoutchouc-métal selon l'une quelconque des revendications 1 à 12.

14. Article de caoutchouc, comprenant le corps composite caoutchouc-métal selon l'un quelconque des revendications 1 à 12.
